# EUROPÄISCHE PATENTSCHRIFT

(11) **EP 1 913 714 B1**
(45) Veröffentlichungstag und Bekanntmachung des Hinweises auf die Patenterteilung: **24.03.2010**
(21) Anmeldenummer: 06763794.2
(22) Anmeldetag: 20.06.2006
(51) Int. Cl.: H04B 10/18

(54) **VERFAHREN UND ANORDNUNG ZUR POLARISATIONSMODENDISPERSIONS-KOMPENSATION**
METHOD AND SYSTEM FOR POLARIZATION MODE DISPERSION COMPENSATION
PROCEDE ET DISPOSITIF POUR COMPENSER UNE DISPERSION DE MODE DE POLARISATION

(30) Priorität: 02.08.2005 DE 102005036297
(43) Veröffentlichungstag der Anmeldung: 23.04.2008
(73) Patentinhaber: Nokia Siemens Networks GmbH & Co. KG, 81541 München (DE)
(72) Erfinder: GOTTWALD, Erich, 83607 Holzkirchen (DE)
(86) Internationale Anmeldenummer: PCT/EP2006/063348
(87) Internationale Veröffentlichungsnummer: WO 2007/014799

(56) Entgegenhaltungen:
- US-A1- 2004 120 629
- US-A1- 2004 151 416
- US-B1- 6 671 464

## Beschreibung

Die Erfindung betrifft Verfahren und Anordnungen zur PMD-Kompensation, die in den unabhängigen Ansprüchen angegeben sind.

Bei älteren Glasfasern wird die Übertragung bereits bei einer Datenrate von 10 Gbit/s erheblich durch Polarisationsmodendispersion (PMD) gestört. Auch bei neu verlegten Glasfasern führt die PMD bei höheren Datenraten zu erheblichen Störungen. Prinzipiell kann PMD kompensiert werden. Es existieren hierfür mehrere Konzepte und unterschiedliche Verfahren. Ein Problem bei der Kompensation ist das Erkennen der PMD, da in der Regel weitere störende Effekte vorhanden sind. Aus dem Patent DE 19 941 150 A1 ist ein Regelverfahren bekannt, das nach einer optisch-elektrischen Wandlung das Spektrum mit mehreren Filtern analysiert und aus den Intensitäten der selektierten Wellenlängen Rückschlüsse auf die PMD des Systems zieht.

Ein weiteres Verfahren, mit dem prinzipiell sämtliche Arten von Störungen kompensiert werden können, misst die Fehlerrate bzw. die Pseudofehlerrate als Qualitätskriterium für die Einstellung des PMD-Kompensators. Dieses Verfahren ist jedoch zu langsam, wenn mehrere Parameter des Kompensators optimiert werden müssen.

In der Patentschrift US 6,671,464 B1 ist ein PMD-Kompensator beschrieben, der aus einem Messsignal unterschiedlich polarisierte Komponenten gewonnen und in elektrische Signalkomponenten umgesetzt, die einer Analyse- und Steuereinheit zugeführt werden, die den PMD-Kompensator steuert.

Aufgabe der Erfindung ist es, sichere Verfahren zur PMD-Kompensation und dazu geeignete Anordnungen anzugeben.

Diese Aufgabe wird durch die in den unabhängigen Ansprüchen angegebenen Merkmale gelöst.

Vorteilhafte Weiterbildungen sind in den abhängigen Ansprüchen angegeben Bei perfekter PMD-Kompensation ist die Form des eines vom kompensierten Signal abgezweigten Messsignals unabhängig von seiner Polarisation, also unabhängig von der Einstellung eines Polarisationsanalystors/Polarisationsfilters. Damit ist auch das elektrische Spektrum des Messsignals, bis auf den Pegel, von der Polarisation unabhängig. Werden daher die Messungen bei zwei unterschiedlichen Einstellungen des Polarisationsstellers durchgeführt, was der Messung von unterschiedlich polarisierten Signalkomponenten entspricht, müssen diese dasselbe Spektrum ergeben, wenn die PMD-Kompensation optimal ist. Bei einem nicht kompensierten Messsignal ergeben sich vom Grad der Fehlkompensation abhängige Unterschiede. Das Regelverfahren nutzt diese Messungen, um beispielsweise im Trial- und Error-Verfahren oder spektrumsabhängig die Unterschiede zu minimieren.

Zur Reduzierung des Aufwands können die Messungen zeitlich aufeinander folgend durchgeführt werden.

Vorteilhafter ist es jedoch, die Messungen gleichzeitig bei unterschiedlich polarisierten Messsignalkomponenten durchzuführen. Dies verkürzt die Messzeit und erhöht die Genauigkeit, da dieselbe Signalfolge bewertet wird.

Zur Auswertung der Unterschiede von unterschiedlich polarisierten Messsignalkomponenten kann statt der Messung der Spektren eine Korrelation der unterschiedlich polarisierten Messsignalkomponenten durchgeführt werden. Hierbei können die Messsignalkomponenten auch orthogonal zueinander sein. Die beiden Messmethoden können auch kombiniert werden.

Auf einen Polarisationssteller kann verzichtet werden, wenn gleichzeitig mindestens drei unterschiedlich polarisierte Messsignalkomponenten durch eine PolarisationsFiltereinrichtung erzeugt werden. Die Spektren der in elektrische Messsignalkomponenten umgesetzten optischen Messsignalkomponenten werden dann miteinander verglichen oder korreliert.

Besonders vorteilhaft ist die Aufteilung des Messsignals in vier unterschiedlich polarisierte Komponenten, die jeweils einen unterschiedlichen Winkel von 45° (90° auf der Poin-Carre-Kugel) aufweisen. Hierdurch ist ein nahezu optimaler Vergleich zu den Spektren bzw. eine nahezu optimale Korrelation von orthogonalen Signalkomponenten möglich.

Ausführungsbeispiele der Erfindung werden anhand von Prinzipschaltbildern näher erläutert.
Es zeigen:
- Figur 1: Eine PMD-Kompensationseinrichtung mit Polarisationssteller,
- Figur 2: eine vorteilhafte Variante mit gleichzeitiger Auswertung von zwei unterschiedlich polarisierten Messsignalkomponenten,
- Figur 3: eine weitere Variante ohne Polarisationssteller,
- Figur 4: eine entsprechende Variante mit einer Korrelationseinrichtung,
- Figur 5: eine besonders vorteilhafte Variante, die vier unterschiedlich polarisierte Messsignalkomponenten auswertet.

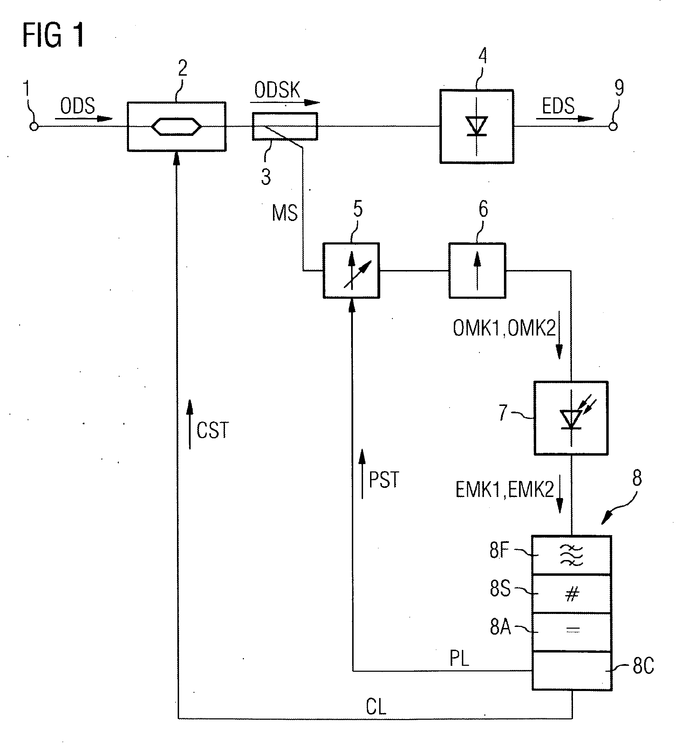

**Figur 1** zeigt ein Prinzipschaltbild der Korrelationseinrichtung. Dem Signaleingang 1 eines PMD-Kompensators 2 (Polarisationsmodendispersion) wird ein optisches Signal ODS, in der Regel ein Datensignal, zugeführt. Dies gelangt über einen Splitter 3 zu einem Empfangsteil 4, wo es demoduliert und als elektrisches (Daten-) Signal EDS am Signalausgang 9 abgegeben wird. Die Aufgabe des PMD-Kompensators 2 besteht darin, die durch PMD verursachte Aufspaltung des übertragenen Signals in Signalkomponenten wieder optimal zu kombinieren, so dass ein möglichst unverzerrtes kompensiertes optisches Signal ODSK dem Empfangsteil 4 zugeführt wird. Der PMD-Kompensator 2 muss geregelt werden, da die PMD keine zeitlich konstante Größe ist. Deshalb wird vom kompensierten Signal ODSK am Ausgang des PMD-Kompensators ein geringer Anteil als Messsignal MS abgezweigt und einem Polarisationssteller 5 zugeführt. Dieser liefert als Ausgangssignal ein Messsignal einer bestimmten Polarisation. Eine bestimmte Polarisation aufweisende optische Messsignalkomponente OMK1 wird von einem nachgeschalteten Polarisationsfilter 6 selektiert und über einen optisch-elektrischen Wandler 7 einer Analyse- und Steuereinheit 8 zugeführt. Diese enthält beispielsweise eine Filterbank 8F mit verschiedenen Bandpässen, die das Spektrum der Messsignalkomponente OMK1 auswerten. Die Messung von drei unterschiedlichen Frequenzen kann hierbei ausreichend sein. Die gewonnenen Spektralwerte werden in einem Speicher 8S zwischengespeichert und in einer Analyseeinheit 8F ausgewertet. Dann wird durch ein von einem Steuerteil 8C über die Steuerleitung CL abgegebenes Polarisator-Steuersignal PST der Polarisationssteller 5 verändert und eine ursprünglich anders polarisierte Messsignalkomponente OMK2 am Ausgang des Polarisationsfilters 6 selektiert. Die Spektren der beiden Messsignalkomponenten OMK1 und OMK2 werden miteinander verglichen und die Unterschiede werden durch Steuerung des PMD-Kompensators 2 minimiert. Hierbei kann vom Steuerteil 8C der Analyse- und Steuereinheit 8 ein Trial- und Error-Verfahren angewendet werden oder eine zumindest teilweise von aufeinander folgenden Messergebnissen abhängige gezielte Einstellung des PMD-Kompensators über eine Kompensator-Steuerleitung CL durch ein Kompensator-Steuersignal CST erfolgen.

Die Erfindung beruht auf folgende Überlegungen: Sind außer PMD (erster Ordnung) keine Störeinflüsse vorhanden, dann sind beide Eigenmoden (Eigenzustände) des optischen Datensignals von der PMD (erster Ordnung) nicht betroffen. Beide Signalkomponenten und damit die Messsignalkomponenten und die Spektren der demodulierten Signale zeigen daher das gleiche Erscheinungsbild. Aber die Summe beider Komponenten liefert aufgrund der PMD das PMD-verzerrte optische Signal ODS. Wird daher das resultierende Signal mit einer unverzerrten Messsignalkomponente, d.h. eine der beiden Eigenmoden, verglichen, gibt es entsprechende Abweichungen in der Form des elektrischen Signals und den Spektren. Dasselbe gilt, wenn unterschiedlich polarisierte Messsignalkomponenten miteinander verglichen werden. Nur bei einer Änderung der Polarisation um 90° kann es dazu kommen, dass die orthogonalen Eigenmoden der Faser detektiert werden. Dann wäre die Kompensation trotz gleicher Spektren fehlerhaft. Deshalb muss der Polarisationssteller dafür sorgen, dass diese Zustände vermieden werden und nur Polarisationsunterschiede ungleich 90° einstellen. Zum Vergleich der Spektren werden die den einzelnen Frequenzen zugeordneten Signale in der Analyse- und Steuereinheit zweckmäßigerweise normiert. Ein Nachteil des Verfahrens ist es, dass aufeinander folgende Signalfolgen bewertet werden, die bei kurzen Messintervallen zu Fehlergebnissen führen können. Erst wenn die Messintervalle ausreichend lang sind, wird ein zuverlässiges Ergebnis geliefert.

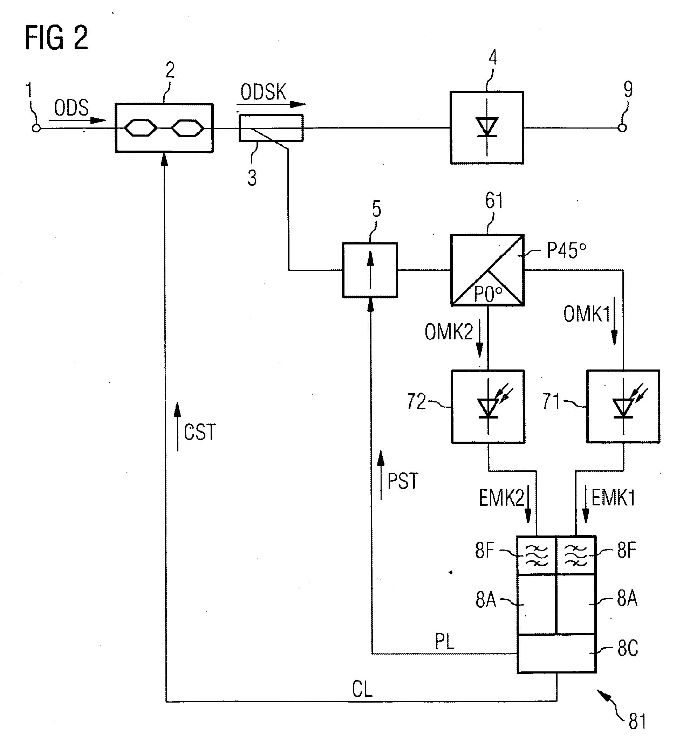

**Figur 2** zeigt eine vorteilhafte Ausführung bei der die Messung von zwei polarisierten Signalkomponenten gleichzeitig erfolgt. Zu diesem Zweck ist dem Polarisationssteller 5 eine Polarisations-Filtereinheit 62 nachgeschaltet, die zwei unterschiedlich polarisierte Messsignalkomponenten OMK1 und OMK2 liefert, z.B. mit den linearen Polarisationen P0° und P45°. Der Polarisationssteller 5 wird hierbei so eingestellt, dass die Signalkomponenten nicht mit den Eigenzuständen zusammenfallen oder seine Einstellung wird während einer Messperiode kontinuierlich verändert (vorzugsweise um ein Vielfaches von 180°), so dass dieser kritische Zustand nur kurz auftritt. Dies kann außerdem vermieden werden, wenn die Differenz der Polarisationswinkel ungleich 90° (180° auf der Poincare-Kugel) ist. Die Spektren beider Messsignalkomponenten OMK1 und OMK2 werden durch getrennte Filterbänke 8F ausgewertet und normiert miteinander verglichen. Die Einstellung des PMD-Kompensators 2 erfolgt so, dass beide normierte Spektren möglichst gleich sind.

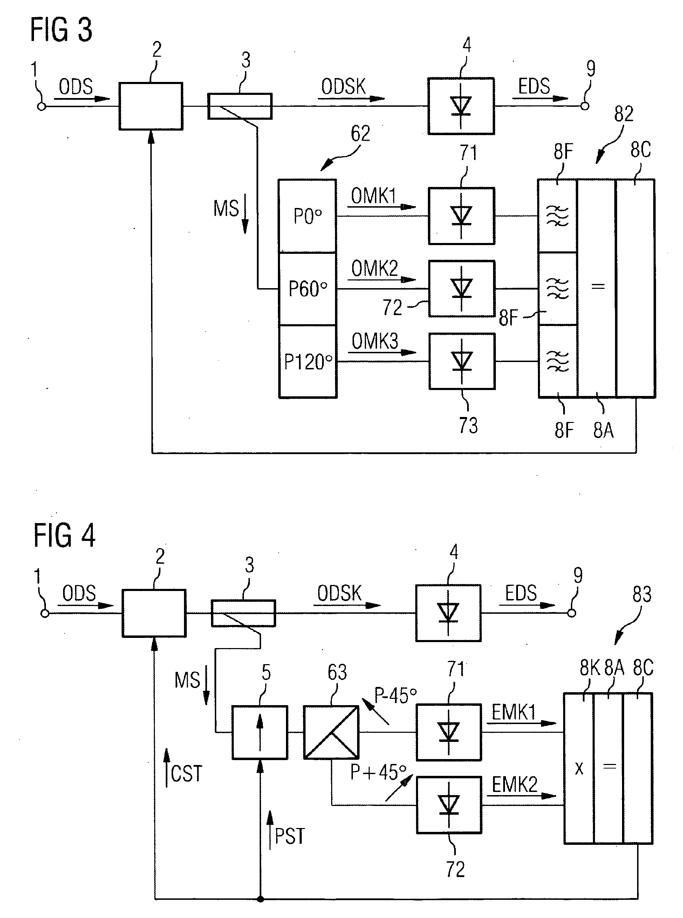

In **Figur 3** ist eine weitere Anordnung dargestellt, die auf einen Polarisationssteller verzichtet. Eine Polarisationsfiltereinheit 62 gibt drei jeweils um 60° unterschiedlich polarisierte optische Messsignalkomponenten OMK1, OMK2 und OMK3 ab (z.B. mit den Polarisationen P0°, P60°, P120°). Diese werden nach der optisch -elektrischen Wandlung drei Filterbanken 8F zugeführt, die die Signalspektren der elektrischen Messsignalkomponenten ermitteln. Nach einer Standardisierung und Analyse der Spektren wird der Unterschied zwischen den Spektren durch Einstellung des PMD-Kompensators minimiert. Es reicht aus, jeweils nur die beiden Spektren miteinander zu vergleichen, die die größten Unterschiede aufweisen. Dies wird zunächst festgestellt, bevor die Optimierung der Kompensation erfolgt.

**Figur 4** zeigt eine weitere Variante der PMD-Kompensationseinrichtung, die weitgehend der Figur 2 entspricht. Das Messsignal wird in einer Polarisationsfiltereinheit 63 in zwei unterschiedlich polarisierte Messsignalkomponenten aufgeteilt. Anstelle der Verwendung von mehreren Filterbanken zur Bewertung des Spektrums werden aber die elektrischen Messsignalkomponenten EMK1 und EMK2 miteinander zeitlich korreliert. Der Unterschied in der Polarisation der optischen Messsignalkomponenten kann nunmehr auch 90° betragen, z. B. P-45° und P+45° gegenüber dem Messsignal am Ausgang des Polarisationsstellers. Werden die Eigenzuständen entsprechende elektrische Messsignalkomponenten EMK1 und EMK2 miteinander korreliert, so führt dies zu einer optimalen Empfindlichkeit gegenüber DPM erster Ordnung. Bei dieser Ausführungsform, wie auch bei den weiteren Versionen mit Polarisationssteller 5, wird zunächst dessen Einstellung optimiert und dann dieser Zustand durch Regelung beibehalten. Die Einstellung des PMD-Kompensators erfolgt anschließend aufgrund der in den Korrelatoren 8K ermittelten Unterschiede, deren Summen bzw. deren Quadratsummen minimiert werden. Die Einstellung des Polarisationsstellers kann natürlich auch wieder, wie bei allen Versionen mit Polarisationssteller, variiert werden.

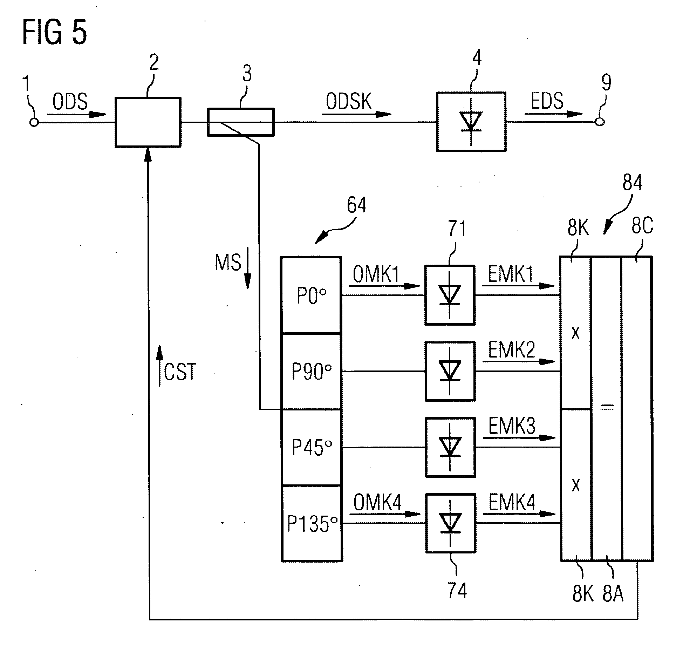

**Figur 5** zeigt wiederum geeignete Ausführung ohne Polarisationssteller, wobei jetzt aber von einer Polarisationsfiltereinheit 64 vier um jeweils 45° unterschiedlich polarisierte Messsignalkomponenten OMK1 - OMK4 mit Polarisationen P0°, P45°, P90°, P135° selektiert werden. Nach der Umsetzung in elektrische Messsignalkomponenten EMK1 - EMK4 werden jeweils 2 Messsignalkomponenten, z,B. EMK1, EMK2, miteinander korreliert (oder die beiden günstigeren Messsignalkomponenten zur Korrelation verwendet). Die Ergebnisse beider Korrelationen können addiert werden, ebenso kann das für die Regelung günstigere Korrelationsergebnis verwendet werden. Für eine Optimierung können bereits die Sigma-Funktion bzw. in binäre Signale umgesetzte Messsignalkomponenten ausreichen. Zu ergänzen ist noch, dass beide Verfahren, die Auswertung des Spektrums und die Korrelation, gemeinsam verwendet werden kann.

Die PMD kann bei höheren Datenraten zu Laufzeitunterschieden zwischen den Eigenzuständen von mehreren Bits führen. Dies ist besonders einfach bei den beschriebenen Korrelationsverfahren zu erkennen, bei denen die Korrelation gleichzeitig oder in zeitlicher Reihenfolge zwischen unterschiedlich lang verzögerten Signalkomponenten durchgeführt wird, um zunächst die Laufzeitunterschiede zwischen den Eigenzuständen zu erkennen (PMD erster Ordnung) und durch entsprechende Einstellung des PMD-Kompensators ein auswertbares Empfangssignal zu erhalten. Nach einer vorläufigen Kompensation der PMD erster Ordnung erfolgt dann die Feineinstellung zur Kompensation von PMD höherer Ordnung. Diese kann auch mit anderen Messmethoden ermittelt werden.

## Patentansprüche

1. Verfahren zur PMD-Kompensation eines optischen Signals (ODS), das von einem PMD-Kompensator (2) in ein kompensiertes optisches Signal (ODSK) korrigiert wird, und bei dem ein vom kompensierten optischen Signal (ODSK) abgezweigtes Messsignal (MS) zur Ermittlung der Polarisationsmodendispersion PMD und zur Steuerung des PMD-Kompensators (2) aufgewendet wird,
**dadurch gekennzeichnet,**
**dass** aus dem Messsignal (MS) eine erste optische Messsignalkomponente (OMK1) mit einer ersten Polarität (P0°) und eine **hierzu nicht orthogonale** zweite optische Messsignalkomponente (OMK2) mit einer zweiten Polarität (P45°) separiert werden,
**dass** die erste optische Messsignalkomponente (OMK1) und die zweite optische Messsignälkomponente (OMK2) in eine erste elektrische Messsignalkomponente (EMK1) und eine zweite elektrische Messsignalkomponente (EMK2) umgesetzt werden, dass die Spektren der Messsignalkomponenten (EMK1, EMK2) gemessen und miteinander verglichen werden und dass der PMD-Kompensator (2) gesteuert wird, um möglichst gleiche Spektren der Messsignalkomponenten (EMK1, EMK2) zu erhalten.

2. Verfahren nach Anspruch 1,
**dadurch gekennzeichnet,**
**dass** die Polarität des kompensierten Signals (ODSK) oder des Messsignals (MS) geregelt wird.

3. Verfahren nach Anspruch 2,
**dadurch gekennzeichnet,**
**dass** die Spektren beider elektrischer Messsignalkomponenten (EMK1, EMK2) zeitlich nacheinander gemessen werden und die Messergebnisse zwischengespeichert werden.

4. Verfahren nach Anspruch 1 oder Anspruch 2,
**dadurch gekennzeichnet,**
**dass** zwei optische Messsignalkomponenten (ODS1) und (ODS2) selektiert werden und die Spektren der elektrischen Messsignalkomponenten (EMSK1, EMSK2) gleichzeitig bewertet werden.

5. Verfahren nach Anspruch 1,
**dadurch gekennzeichnet,**
**dass** mehr als 2 optische Messsignalkomponenten (OMK1, OMK2, OMK3) mit unterschiedlichen Polarisationen (P0°, P60°, P120°) selektiert und in elektrische Messsignal komponenten (EMK1, EMK2, ...) umgesetzt werden.

6. Verfahren nach Anspruch 5,
**dadurch gekennzeichnet,**
**dass** 3 jeweils um 60° unterschiedlich polarisierte Messsignalkomponenten (OMK1, OMK2, OMK3) selektiert und in elektrische Messsignalkomponenten (EMK1, EMK2, ...) umgesetzt werden.

7. Verfahren nach Anspruch 5,
**dadurch gekennzeichnet,**
**dass** 4 unterschiedliche um jeweils 45° unterschiedlich polarisierte Messsignalkomponenten (OMK1, OMK2, OMK3, OMK4) selektiert und in elektrische Messsignalkomponenten (EMK1, EMK2, ...) umgesetzt werden.

8. Verfahren nach Anspruch 5, 6 oder7,
**dadurch gekennzeichnet,**
**dass** die Spektren mindestens zweier elektrischer Messsignalkomponenten (EMK1, EMK2, ...) miteinander verglichen werden.

9. Verfahren nach einem der vorhergehenden Ansprüche,
**dadurch gekennzeichnet,**
**dass** die Spektren vor dem Vergleich normiert werden.

10. Verfahren nach einem der vorhergehenden Ansprüche,
**dadurch gekennzeichnet,**
**dass** mindestens zwei elektrische Messsignalkomponenten (EMSK1, EMSK2) miteinander zeitlich korreliert werden und dass der PMD-Kompensator (2) derart eingestellt wird, dass eine maximale Korrelation erreicht wird.

11. Verfahren nach Anspruch 10,
**dadurch gekennzeichnet,**
**dass** die elektrischen Messsignalkomponenten (EMSK1, EMSK2) vor der Korrelation normiert werden.

12. Verfahren nach Anspruch 10,
**dadurch gekennzeichnet,**
**dass**, die elektrischen Messsignalkomponenten (EMK1, EMK2) in binäre Signale umgesetzt werden, die anschließend miteinander zeitlich korreliert werden.

13. Verfahren nach einem der vorhergehenden Ansprüche,
**dadurch gekennzeichnet,**
**dass** die Einstellung des Polarisationsstellers (5) währen einer Messperiode variiert wird.

14. Anordnung zur PMD-Kompensation mit einem PMD-Kompensator (2), dem ein optisches Signal (ODS) zugeführt wird und der ein kompensiertes optisches Signal (ODSK) abgibt, und mit einer Regeleinrichtung, die ein vom kompensierten optischen Signal (ODSK) abgezweigtes Messsignal (MS) erhält und,
die Reihenschaltung eines Polstellers (5) und einer Polarisationsfiltereinrichtung (6) aufweist,
die unterschiedlich polarisierte optische Messsignalkomponenten (OMK1,OMK2) abgibt,
mindestens einen der der Reihenschaltung (5,6) nachgeschalteten optisch-elektrischen Wandler (7), der elektrische Messsignalkomponenten (EMK1, EMK2) abgibt und einer Analyse- und Steuereinheit zuführt,
**dadurch gekennzeichnet,**
**dass** die Analyse- und Steuereinheit (8) ausgebildet ist,
**Spektren der Messsignalkomponenten (ENK1, EMK2) auszuwerten und den PMD-Kompensator (2) derart zu steuern, dass die Spektren der elektrische Messsignalkomponenten (EMK1, EMK2) möglichst gleich sind.**

15. Anordnung nach Anspruch 14,
**dadurch gekennzeichnet,**
**dass** die Filtereinrichtung (6) als Polarisationsfilter (6) ausgebildet ist und die Reihenschaltung (5,6) so gesteuert wird,
**dass** das Polarisationsfilter (6) zeitlich aufeinander folgend mindestens zwei optische Messsignalkomponenten (OMK1, OMK2) mit unterschiedlichen Polarisation (P0, P45) abgibt,
**dass** die Analyse- und Steuereinheit (8) einen Speicher aufweist, um aufeinander folgende Messsignalkomponenten miteinander zu vergleichen.

16. Anordnung nach Anspruch 14,
**dadurch gekennzeichnet**,
die optischen Filtereinrichtung (10) derart ausgebildet ist, die gleichzeitig mehrere unterschiedlich polarisierte optische Messsignalkomponenten (OMK1, OMK2) abgibt,
dass der Filtereinrichtung (10) optisch-elektrische Wandler (71,72) nachgeschaltet sind, die die optischen Messsignalkomponenten (OMK1, OMK2) in elektrische Messsignalkomponenten (EMK1, EMK2) umsetzen,
dass einer Analyse- und Steuereinrichtung (8) die elektrischen Messsignalkomponenten (EMK1, EMK2) gleichzeitig zugeführt werden, die diese auswertet und den PMD-Kompensator (2) steuert.

17. Anordnung zur PMD-Kompensation mit einem PMD-Kompensator (2), dem ein optisches Signal (ODS) zugeführt wird und der ein kompensiertes optisches Signal (ODSK) abgibt, und mit einer Regeleinrichtung, die ein vom kompensierten optischen Signal (ODSK) abgezweigtes Messsignal (MS) erhält,
dass die Regeleinrichtung eine Polarisationsfiltereinrichtung (62) aufweist, der das Messsignal (MS) zugeführt wird,
**dadurch gekennzeichnet,**
**dass** die Polarisationsfiltereinrichtung mindestens drei optische Messsignalkomponenten (OMK1, OMK2, OMK3) unterschiedliche Polarisation (P0, P60, P120) abgibt,
**dass** optisch-elektrische Wandler (71, 72, 73) vorgesehen sind, die die optischen Messsignalkomponenten (OMK1, OMK2, OMK3) in elektrische Messsignalkomponenten (EMK1, EMK2, MK3) umsetzen, und
**dass** die Analyse- und Steuereinheit (82) ausgebildet ist,
**Spektren von mindestens jeweils zwei der elektrischen Messaignalkomponenten (EMK1, EMK2, MK3) miteinander zu vergleichen und den PMD-Kompensator (2) derart zu steuern, dass die Spektren der elektrische Messsignalkomponenten (EMK11, EMK2) möglichst gleich sind.**

18. Anordnung nach Anspruch 16 oder 17,
**dadurch gekennzeichnet,**
**dass** die Analyse- und Steuereinheit (8) mindestens zwei elektrische Filterbanken (8F) zur gleichzeitigen Bewertung des Spektrums von zwei elektrischen Messsignalkomponenten (EMK1, EMK2, ...) aufweist.

19. Anordnung nach Anspruch 16 oder 17,
**dadurch gekennzeichnet,**
**dass** die Analyse- und Steuereinheit (83,84) ausgebildet ist, jeweils eine Korrelation von mindestens zwei elektrischen Messsignalkomponenten (EMK1, EMK2) durchzuführen.

## Claims

1. Method for the PMD compensation of an optical signal (ODS), which is corrected into a compensated optical signal (ODSK) by a PMD compensator (2) and in which a measurement signal (MS) branched off from the compensated optical signal (ODSK) is employed for determining the polarization mode dispersion PMD and for controlling the PMD compensator (2),
**characterized**
**in that** a first optical measurement signal component (OMK1) having a first polarity (P0°) and a second optical measurement signal component (OMK2) having a second polarity (P45°), which is not orthogonal thereto, are separated from the measurement signal (MS),
**in that** the first optical measurement signal component (OMK1) and the second optical measurement signal component (OMK2) are converted into a first electrical measurement signal component (EMK1) and a second electrical measurement signal component (EMK2),
**in that** the spectra of the measurement signal components (EMK1, EMK2) are measured and compared with one another, and in that the PMD compensator (2) is controlled in order to obtain as far as possible identical spectra of the measurement signal components (EMK1, EMK2).

2. Method according to Claim 1,
**characterized**
**in that** the polarity of the compensated signal (ODSK) or of the measurement signal (MS) is regulated.

3. Method according to Claim 2,
**characterized**
**in that** the spectra of the two electrical measurement signal components (EMK1, EMK2) are measured temporally successively and the measurement results are buffer-stored.

4. Method according to Claim 1 or Claim 2,
**characterized**
**in that** two optical measurement signal components (ODS1) and (ODS2) are selected and the spectra of the electrical measurement signal components (EMK1, EMK2) are assessed simultaneously.

5. Method according to Claim 1,
**characterized**
**in that** more than 2 optical measurement signal components (OMK1, OMK2, OMK3) having different polarizations (P0°, P60°, P120°) are selected and converted into electrical measurement signal components (EMK1, EMK2, ...).

6. Method according to Claim 5,
**characterized**
**in that** 3 measurements signal components (OMK1, OMK2, OMK3) which are polarized differently by 60° in each case are selected and converted into electrical measurement signal components (EMK1, EMK2, ...).

7. Method according to Claim 5,
**characterized**
**in that** 4 different measurement signal components (OMK1, OMK2, OMK3, OMK4) which are polarized differently by 45° in each case are selected and converted into electrical measurement signal components (EMK1, EMK2, ...).

8. Method according to Claim 5, 6 or 7,
**characterized**
**in that** the spectra of at least two electrical measurement signal components (EMK1, EMK2, ...) are compared with one another.

9. Method according to one of the preceding claims,
**characterized**
**in that** the spectra are normalized prior to the comparison.

10. Method according to one of the preceding claims,
**characterized**
**in that** at least two electrical measurement signal components (EMK1, EMK2) are temporally correlated with one another, and in that the PMD compensator (2) is set in such a way that a maximum correlation is achieved.

11. Method according to Claim 10,
**characterized**
**in that** the electrical measurement signal components (EMK1, EMK2) are normalized prior to the correlation.

12. Method according to Claim 10,
**characterized**
**in that** the electrical measurement signal components (EMK1, EMK2) are converted into binary signals which are subsequently temporally correlated with one another.

13. Method according to one of the preceding claims,
**characterized**
**in that** the setting of the polarization controller (5) is varied during a measurement period.

14. System for PMD compensation comprising a PMD compensator (2), to which an optical signal (ODS) is fed and which outputs a compensated optical signal (ODSK) and comprising a regulating device, which receives a measurement signal (MS) branched off from the compensated optical signal (ODSK), and has the series circuit formed by a polarization controller (5) and a polarization filter device (6), which outputs differently polarized optical measurement signal components (OMK1, OMK2),
at least one opto-electrical transducer (7) which is connected downstream of the series circuit (5, 6) and which outputs electrical measurement signal components (EMK1, EMK2) and feeds them to an analysis and control unit,
**characterized**
**in that** the analysis and control unit (8) is designed to evaluate spectra of the measurement signal components (EMK1, EMK2) and to control the PMD compensator (2) in such a way that the spectra of the electrical measurement signal components (EMK1, EMK2) are as far as possible identical.

15. System according to Claim 14,
**characterized**
**in that** the filter device (6) is embodied as a polarization filter (6) and the series circuit (5, 6) is controlled in such a way
that the polarization filter (6) temporally successively outputs at least two optical measurement signal components (OMK1, OMK2) having different polarizations (P0, p45),
**in that** the analysis and control unit (8) has a memory in order to compare successive measurement signal components with one another.

16. System according to Claim 14,
**characterized**
**in that** the optical filter device (10) is embodied in such a way that it simultaneously outputs a plurality of differently polarized optical measurement signal components (OMK1, OMK2),
**in that** opto-electrical transducers (71, 72) are connected downstream of the filter device (10) and convert the optical measurement signal components (OMK1, OMK2) into electrical measurement signal components (EMK1, EMK2),
**in that** the electrical measurement signal components (EMK1, EMK2) are fed simultaneously to an analysis and control device (8), which evaluates said components and controls the PMD compensator (2).

17. System for PMD compensation comprising a PMD compensator (2), to which an optical signal (ODS) is fed and which outputs a compensated optical signal (ODSK) and comprising a regulating device, which receives a measurement signal (MS) branched off from the compensated optical signal (ODSK),
the regulating device has a polarization filter device (62), to which the measurement signal (MS) is fed,
**characterized**
**in that** the polarization filter device outputs at least three optical measurement signal components (OMK1, OMK2, OMK3) having different polarizations (P0, P60, P120),
**in that** opto-electrical transducers (71, 72, 73) are provided which convert the optical measurement signal components (OMK1, OMK2, OMK3) into electrical measurement signal components (EMK1, EMK2, EMK3), and
**in that** the analysis and control unit (82) is designed to compare spectra of at least in each case two of the electrical measurement signal components (EMK1, EMK2, EMK3) with one another and to control the PMD compensator (2) in such a way that the spectra of the electrical measurement signal components (EMK1, EMK2) are as far as possible identical.

18. System according to Claim 16 or 17,
**characterized**
**in that** the analysis and control unit (8) has at least two electrical filter banks (8F) for simultaneously assessing the spectrum of two electrical measurement signal components (EMK1, EMK2, ...).

19. System according to Claim 16 or 17,
**characterized**
**in that** the analysis and control unit (83, 84) is designed to carry out in each case a correlation of at least two electrical measurement signal components (EMK1, EMK2).

## Revendications

1. Procédé pour la compensation d'une dispersion des modes de polarisation d'un signal optique (ODS) qui est corrigé par un compensateur de dispersion des modes de polarisation (2) pour donner un signal optique compensé (ODSK), dans lequel un signal de mesure (MS) dérivé du signal optique compensé (ODSK) est utilisé pour déterminer la dispersion des modes de polarisation PMD et pour commander le compensateur de dispersion des modes de polarisation (2), **caractérisé en ce que**
- sont séparées du signal de mesure (MS) une première composante optique de signal de mesure (OMK1) avec une première polarité (P0°) et une deuxième composante optique de signal de mesure (OMK2), non orthogonale à la première, avec une deuxième polarité (P45°),
- la première composante optique de signal de mesure (OMK1) et la deuxième composante optique de signal de mesure (OMK2) sont converties en une première composante électrique de signal de mesure (EMK1) et une deuxième composante électrique de signal de mesure (EMK2),
- les spectres des composantes de signal de mesure (EMK1, EMK2) sont mesurés et comparés entre eux et le compensateur de dispersion des modes de polarisation (2) est commandé pour obtenir des spectres des composantes de signal de mesure (EMK1, EMK2) aussi égaux que possible.

2. Procédé selon la revendication 1, **caractérisé en ce que** la polarité du signal compensé (ODSK) ou du signal de mesure (MS) est réglée.

3. Procédé selon la revendication 2, **caractérisé en ce que** les spectres des deux composantes électriques de signal de mesure (EMK1, EMK2) sont mesurés successivement dans le temps et les résultats des mesures sont stockés temporairement.

4. Procédé selon la revendication 1 ou la revendication 2, **caractérisé en ce que** deux composantes optiques de signal de mesure (ODS1) et (ODS2) sont sélectionnées et les spectres des composantes électriques de signal de mesure (EMK1, EMK2) sont évalués simultanément.

5. Procédé selon la revendication 1, **caractérisé en ce que** plus de 2 composantes optiques de signal de mesure (OMK1, OMK2, OMK3) avec des polarisations différentes (P0°, P60°, P120°) sont sélectionnées et converties en composantes électriques de signal de mesure (EMK1, EMK2, ...).

6. Procédé selon la revendication 5, **caractérisé en ce que** 3 composantes de signal de mesure polarisées avec une différence respective de 60° (OMK1, OMK2, OMK3) sont sélectionnées et converties en composantes électriques de signal de mesure (EMK1, EMK2, ...).

7. Procédé selon la revendication 5, **caractérisé en ce que** 4 composantes de signal de mesure polarisées avec une différence respective de 45° (OMK1, OMK2, OMK3, OMK4) sont sélectionnées et converties en composantes électriques de signal de mesure (EMK1, EMK2, ...).

8. Procédé selon la revendication 5, 6 ou 7, **caractérisé en ce que** les spectres d'au moins deux composantes électriques de signal de mesure (EMK1, EMK2, ...) sont comparés entre eux.

9. Procédé selon l'une des revendications précédentes, **caractérisé en ce que** les spectres sont normalisés avant la comparaison.

10. Procédé selon l'une des revendications précédentes, **caractérisé en ce qu'**au moins deux composantes électriques de signal de mesure (EMK1, EMK2) sont corrélées entre elles dans le temps et **en ce que** le compensateur de dispersion des modes de polarisation (2) est réglé de manière à obtenir une corrélation maximale.

11. Procédé selon la revendication 10, **caractérisé en ce que** les composantes électriques de signal de mesure (EMK1, EMK2) sont normalisées avant la corrélation.

12. Procédé selon la revendication 10, **caractérisé en ce que** les composantes électriques de signal de mesure (EMK1, EMK2) sont converties en signaux binaires qui sont ensuite corrélés entre eux dans le temps.

13. Procédé selon l'une des revendications précédentes, **caractérisé en ce que** le réglage du régleur de polarisation (5) subit des variations pendant une période de mesure.

14. Dispositif de compensation de dispersion des modes de polarisation avec un compensateur de dispersion des modes de polarisation (2) sur lequel est envoyé un signal optique (ODS) et qui délivre un signal optique compensé (ODSK), et avec un dispositif de réglage qui reçoit un signal de mesure (MS) dérivé du signal optique compensé (ODSK) et qui comporte un montage en série d'un régleur de polarisation (5) et d'un dispositif de filtrage de polarisation (6), lequel délivre des composantes optiques de signal de mesure (OMK1, OMK2) polarisées différemment, et avec au moins un convertisseur opto-électrique (7) monté en aval du montage en série (5, 6), lequel convertisseur délivre des composantes électriques de signal de mesure (EMK1, EMK2) et les envoie sur une unité d'analyse et de commande, **caractérisé en ce que** l'unité d'analyse et de commande (8) est réalisée pour évaluer des spectres des composantes de signal de mesure (EMK1, EMK2) et commander le compensateur de dispersion des modes de polarisation (2) de manière telle que les spectres des composantes électriques de signal de mesure (EMK1, EMK2) soient aussi égaux que possible.

15. Dispositif selon la revendication 14, **caractérisé en ce que** le dispositif de filtrage (6) se présente sous la forme d'un filtre de polarisation (6) et le montage en série (5, 6) est commandé de manière telle que le filtre de polarisation (6) délivre au moins deux composantes optiques de signal de mesure (OMK1, OMK2) qui se succèdent dans le temps et présentent une polarisation différente (P0, P45), et **en ce que** l'unité d'analyse et de commande (8) comporte une mémoire pour comparer entre elles des composantes successives de signal de mesure.

16. Dispositif selon la revendication 14, **caractérisé en ce que** le dispositif de filtrage optique (10) se présente de manière telle qu'il délivre simultanément plusieurs composantes optiques de signal de mesure (OMK1, OMK2) polarisées différemment, **en ce que** sont montés, en aval du dispositif de filtrage (10), des convertisseurs opto-électriques (71, 72) qui convertissent les composantes optiques de signal de mesure (OMK1, OMK2) en composantes électriques de signal de mesure (EMK1, EMK2) et **en ce que** les composantes électriques de signal de mesure (EMK1, EMK2) sont envoyées simultanément sur un dispositif d'analyse et de commande (8) qui évalue ceux-ci et commande le compensateur de dispersion des modes de polarisation (2).

17. Dispositif de compensation de dispersion des modes de polarisation avec un compensateur de dispersion des modes de polarisation (2) sur lequel est envoyé un signal optique (ODS) et qui délivre un signal optique compensé (ODSK), et avec un dispositif de réglage qui reçoit un signal de mesure (MS) dérivé du signal optique compensé (ODSK), le dispositif de réglage comportant un dispositif de filtrage de polarisation (62) sur lequel est envoyé le signal de mesure (MS), **caractérisé en ce que** le dispositif de filtrage de polarisation délivre au moins trois composantes optiques de signal de mesure (OMK1, OMK2, OMK3) de polarisation différente (P0, P60, P120), **en ce que** sont prévus des convertisseurs opto-électriques (71, 72, 73) qui convertissent les composantes optiques de signal de mesure (OMK1, OMK2, OMK3) en composantes électriques de signal de mesure (EMK1, EMK2, EMK3) et **en ce que** l'unité d'analyse et de commande (82) est réalisée pour comparer entre eux des spectres de respectivement au moins deux des composantes électriques de signal de mesure (EMK1, EMK2, EMK3) et pour commander le compensateur de dispersion des modes de polarisation (2) de manière telle que les spectres des composantes électriques de signal de mesure (EMK1, EMK2) soient aussi égaux que possible.

18. Dispositif selon la revendication 16 ou 17, **caractérisé en ce que** l'unité d'analyse et de commande (8) comporte au moins deux batteries de filtrage électrique (8F) aux fins de l'évaluation simultanée du spectre de deux composantes électriques de signal de mesure (EMK1, EMK2, ...).

19. Dispositif selon la revendication 16 ou 17, **caractérisé en ce que** l'unité d'analyse et de commande (83, 84) est réalisée pour effectuer respectivement une corrélation d'au moins deux composantes électriques de signal de mesure (EMK1, EMK2).
